Europäisches Patentamt

European Patent Office

Office européen des brevets

(11) Publication number: **0 488 290 A1**

## EUROPEAN PATENT APPLICATION

(21) Application number: **91120404.8**

(22) Date of filing: **28.11.91**

(51) Int. Cl.5: **G05B 19/18, B23Q 15/02**

(30) Priority: **29.11.90 JP 333355/90**

(43) Date of publication of application:
**03.06.92 Bulletin 92/23**

(84) Designated Contracting States:
**DE FR GB**

(71) Applicant: **TOYODA KOKI KABUSHIKI KAISHA**
**1-1, Asahi-machi**
**Kariya-shi Aichi-ken(JP)**

(72) Inventor: **Arimoto, Naoki**
**5-1, Ikeda, Takahama-cho**
**Takahama-shi, Aichi-ken(JP)**

Inventor: **Hayashi, Yutaka**
**301, Residence Higashikariya, 3-5-3,**
**Suehiro-cho**
**Kariya-shi, Aichi-ken(JP)**
Inventor: **Yamanaka, Masashi**
**6-208, Shinmei-cho**
**Kariya-shi, Aichi-ken(JP)**

(74) Representative: **Pellmann, Hans-Bernd,**
**Dipl.-Ing.**
**Patentanwaltsbüro**
**Tiedtke-Bühling-Kinne-Grupe-Pellmann-Gra-**
**ms, Bavariaring 4**
**W-8000 München 2(DE)**

(54) **Method and apparatus for preparing numerical control data for a numerically controlled machine tool.**

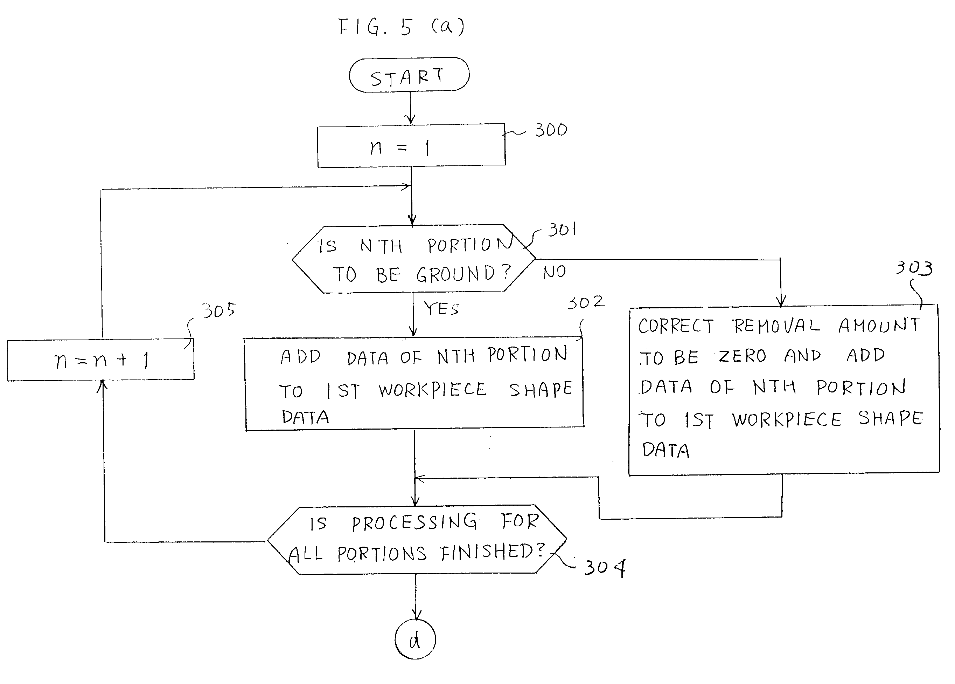

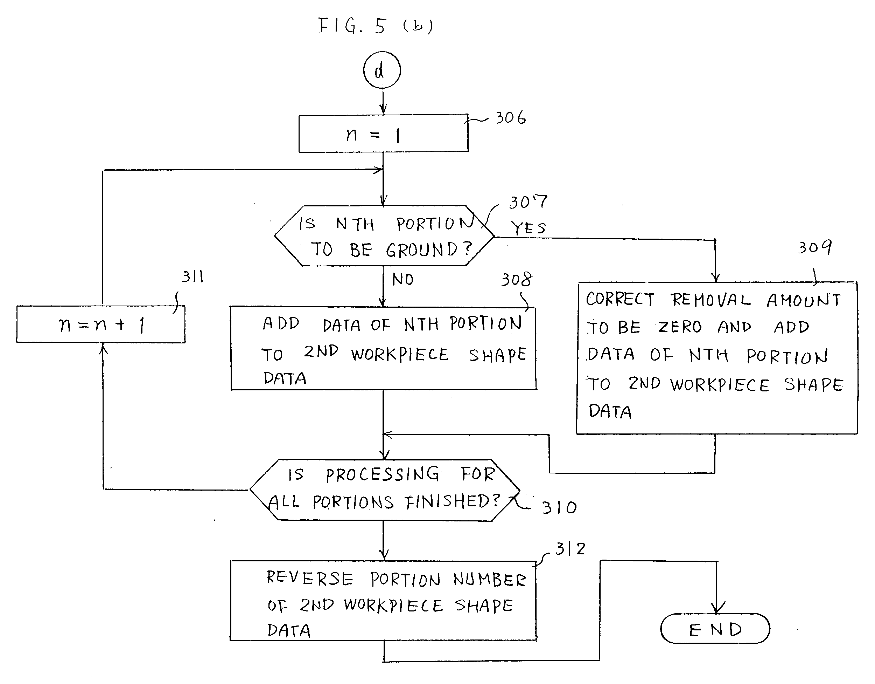

(57) A numerically controlled grinding machine (40) for grinding plural portions of a cylindrical workpiece (W), wherein some of the portions are ground in a first grinding stage (106) and the rest of portions are ground in a second grinding stage (108). An operator inputs machining data required for grinding plural portions (100), and designates the some of portions to be ground in a first grinding stage (102). The numerical controller of the grinding machine generates a first set of numerical control data used in the first grinding stage (Fig. 5) in which the some of portions are ground and a second set of numerical control data used in the second grinding stage in which the rest of portions are ground. The numerical controller executes grinding operation using the first set of numerical control data (fig. 5b) when the workpiece is supported under the state that one end of the workpiece faces the main spindle, while executing grinding operation using the second set of numerical control data when the workpiece is supported under the state that other end of the workpiece faces the main spindle.

FIG. 1 (b)

## BACKGROUND OF THE INVENTION

### Field of the Invention:

This invention relates to a method and an apparatus for preparing numerical control data used for controlling a numerically controlled machine tool such as a numerically controlled grinding machine.

### Prior Art of the Invention:

In a numerically controlled machine tool such as a numerically controlled grinding machine, workpieces are some time machined not by a single continuous machining stage but by plural separate machining stages. For example, in a numerically controlled grinding machine having an angular grinding wheel cannot grind plural cylindrical portions located at both ends of a cylindrical workpiece in a single continuous grinding operation. In such case, some of cylindrical portions of the workpiece are ground under the state that one end of a workpiece is engaged with a drive mechanism of a workpiece spindle, and the workpiece is then turned so that the other end of the workpiece is engaged with the drive mechanism of the workpiece spindle. Under this condition, the rest of the cylindrical portions are ground. Since workpieces are ground by two grinding stages, as described above, two sets of numerical control data, i.e., one is for the first grinding stage, and the other is for the second grinding stage, are required to be prepared and to be memorized in a memory of a numerical controller. For preparing these two sets of numerical control data, an operator must input data defining the shapes of some of cylindrical portions to be ground in a first grinding stage, and machining data used for automatically generating numerical control data for the some of cylindrical portions. After that, the operator must repeat same operation to input data defining the shape and machining data for the rest of the cylindrical portions to be ground in a second grinding stage.

As described above, in a conventional numerically controlled grinding machine, an operator must input various data twice even though workpieces of a single kind are ground. This causes an increase of data inputting time, thereby decreasing the productivity.

## SUMMARY OF THE INVENTION

Accordingly, it is an object of the present invention to provide an improved method and an improved apparatus for automatically generating plural sets of numerical control data used for plural separate machining stages based upon one set of data which are input at a time, thereby reducing data inputting time.

Another object of the present invention is to provide a method and an apparatus for effectively generating numerical control data used for controlling a grinding machine which grinds a cylindrical workpiece having plural portions to be ground in two separate stages.

Briefly, a method of preparing a numerical control data according to the present invention comprises steps of inputting data defining the machining shapes of plural portions of a workpiece to be machined in plural machining stages; designating portions to be machined in respective machining stages; and generating plural sets of numerical control data used in the respective stages in which the designated portions are respectively machined.

An apparatus for preparing a numerical control data according to the present invention comprises means for inputting data defining the machining shapes of plural portions of a workpiece to be machined in plural machining stages; means for designating portions to be machined in respective machining stages; and means for generating plural sets of numerical control data used in the respective stages in which the designated portions are respectively machined.

According to the present invention, plural sets of numerical control data are prepared to be used in plural separate machining stages based upon one set of data defining the machining shapes of plural portions to be machined. Therefore, the data inputting time is reduced as compared With conventional numerical controllers.

## BRIEF DESCRIPTION OF THE ACCOMPANYING DRAWINGS

Various other objects, features and many of the attendant advantages of the present invention will be readily appreciated as the same becomes better understood by reference to the following detailed description of the preferred embodiments when considered in connection with the accompanying drawings, in which:

FIG. 1 (a) is a plan view of a grinding machine;

FIG. 1 (b) is a block diagram showing the overall structure of a numerical controller for controlling the grinding machine shown in FIG. 1 (a) which constitutes a numerical control data preparation apparatus according to a preferred embodiment of the present invention;

FIG. 2 (a) and 2 (b) are charts showing memory areas formed in a memory of the numerical controller shown in FIG. 1 (b);

FIGS. 3 (a), 3 (b), 4, 5 (a), 5 (b) and 6 are flowcharts showing the processing of a CPU shown in FIG. 1 for preparing numerical control data;

FIG. 7 is a chart showing a designation table displayed on a CRT for designating portions to be machined in a first grinding stage;

FIG. 8 (a) is a chart showing portions to be machined in a first machining stage;

FIG. 8 (b) is a chart showing portions to be machined in a second machining stage;

FIGS. 9 (a) through 9 (e) are charts showing variety of machining cycles;

FIG. 10 is an explanatory chart showing a method of defining the machining shapes of respective portions of a workpiece;

FIG. 11 is a chart displayed on the CRT for data input; and

FIG. 12 is a flowchart showing the processing of the CPU for controlling the grinding machine to grind the plural portions of the workpiece.

## DETAILED DESCRIPTION OF PREFERRED EMBODIMENT

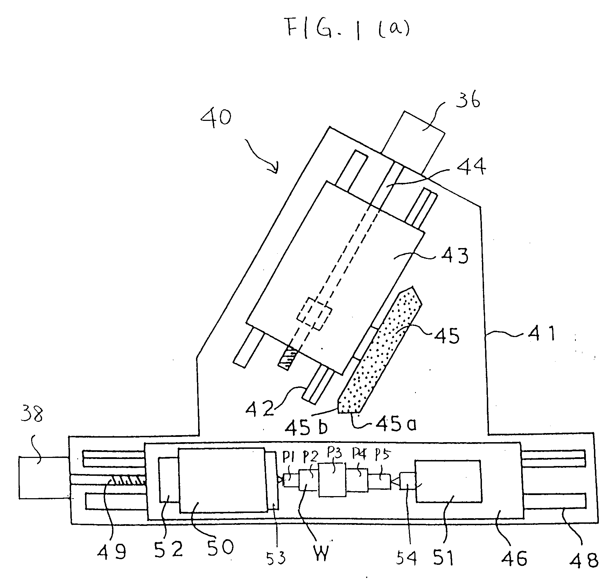

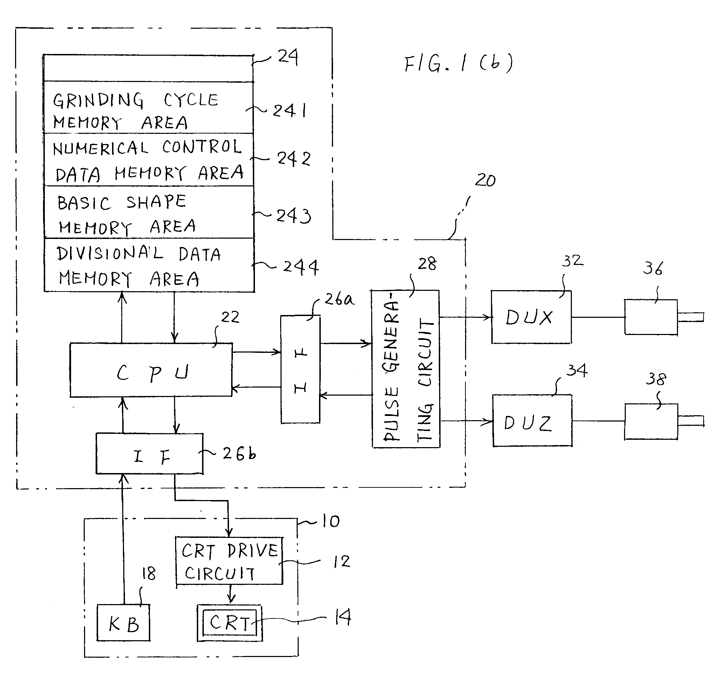

A preferred embodiment of the present invention will now be described with reference to figures. In FIG. 1 (a), a numerically controlled grinding machine 40 is shown which is controlled by a numerical controller 20 shown in FIG. 1 (b). The numerical controller constitutes a numerical control data preparation apparatus according to the present invention.

The grinding machine 40 is provided with a table 46 which is supported by guides 48 formed on a bed 41 for a movement in a first horizontal direction. Mounted on the table 46 are a spindle head 50 carrying a main spindle 53 rotated by a motor 52 and a tail stock 51 carrying a tail stock spindle 54. A cylindrical workpiece W having plural portions P1, P2, P3, P4 and P5 to be ground is supported between the main spindle 53 and the tail stock spindle 54 through centers to be rotated by the main spindle 54 through a now shown drive mechanism. The table 52 is moved in the first horizontal direction by the rotation of a screw shaft 49 rotated by a servomotor 38. Also, a wheel head 43 is supported on the bed 41 through guides 42 for movement in a second horizontal direction intersecting with the first horizontal direction with a predetermined angle, and is moved by the rotation of a screw shaft 44 rotated by a servomotor 36. An angular grinding wheel 45 is carried on the wheel head through a wheel spindle. The grinding wheel 45 has a first grinding surface 45a used for grinding cylindrical surfaces, and a second grinding surface 45b for grinding shoulder end surfaces.

The numerical controller 20 is mainly composed of a CPU 22, a memory 24, interface circuits 26a and 26b, and a pulse generating circuit 28. The pulse generating circuit 28 is connected to the CPU 22 through the interface circuit 26a to receive command signals from the CPU 22. In response to the command signals form the CPU 22, the pulse generating circuit 28 distributes pulses to drive circuits 32 and 34 to drive the servomotors 36 and 38, respectively. An operation panel 10 is also connected to the CPU 22 through the interface circuit 26b. The operation panel 10 is provided with a CRT drive circuit 12, a CRT 14 and a key board 18 and the like.

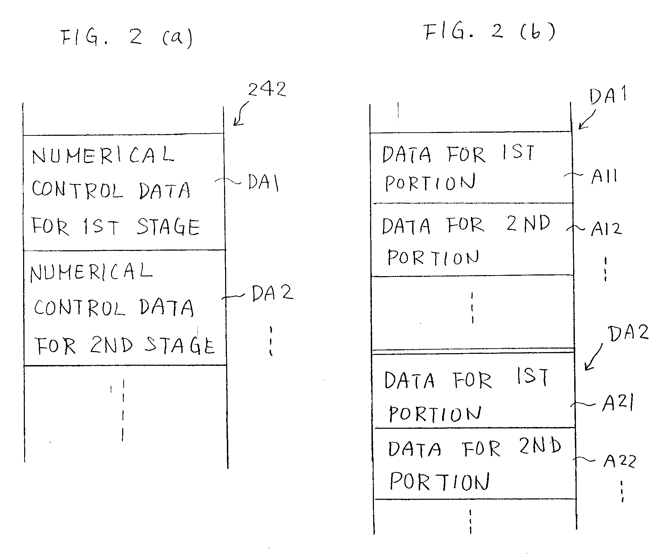

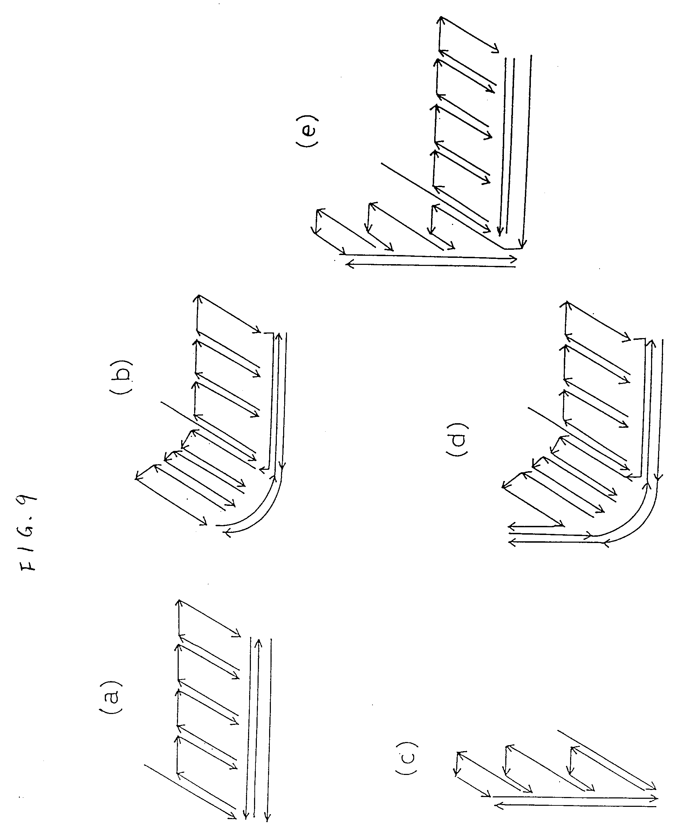

In the memory 24, there are formed a grinding cycle memory area 241, a numerical control data memory area 242, a basic shape memory area 243 and a divisional data memory area 244, as shown in FIG. 1 (b). The grinding cycle memory area 241 memorizes plural numerical control programs corresponding variety of grinding modes or grinding cycles such as cylindrical grinding, cylindrical grinding with arc grinding, shoulder grinding, cylindrical grinding with shoulder grinding and arc grinding, and traverse grinding with shoulder grinding shown in FIGS. 9 (a) through 9 (e), respectively. The numerical control data memory area 242 is composed of plural data areas DA1, DA2 ... DAn for memorizing plural sets of numerical control data for plural workpieces, as shown in FIG. 2 (a). When some of plural machining portions of a workpiece are ground in a first grinding stage and the rest of them ground in a second grinding stage, two data area, for example DA1 and DA2 are used for memorizing two sets of numerical control data which are used in the first grinding stage and second grinding stage, respectively. Each of the data areas DA1 through DAn is composed of plural small data areas, A11, A12 ... corresponding to plural machining portions to be ground in a single machining stage, as shown in FIG. 2 (b). Each of the small data areas A11, A12 ... memorizes data indicating grinding mode, and other numerical control data such as removal amounts and feed rates in rough grinding, fine grinding and finish grinding. As will be described later, these numerical control data are automatically determined based upon input data such as final dimensions and total removal amounts of respective portions. As will be understood by the following description, grinding control for each portion is carried out using a numerical control program corresponding to a grinding mode and numerical control data memorized in the small memory area.

The basic shape memory area 243 memorizes plural basic shapes which are used for defining the shape of each portion, while the division data memory area 244 memorizes designation data used for dividing a grinding operation into two stages.

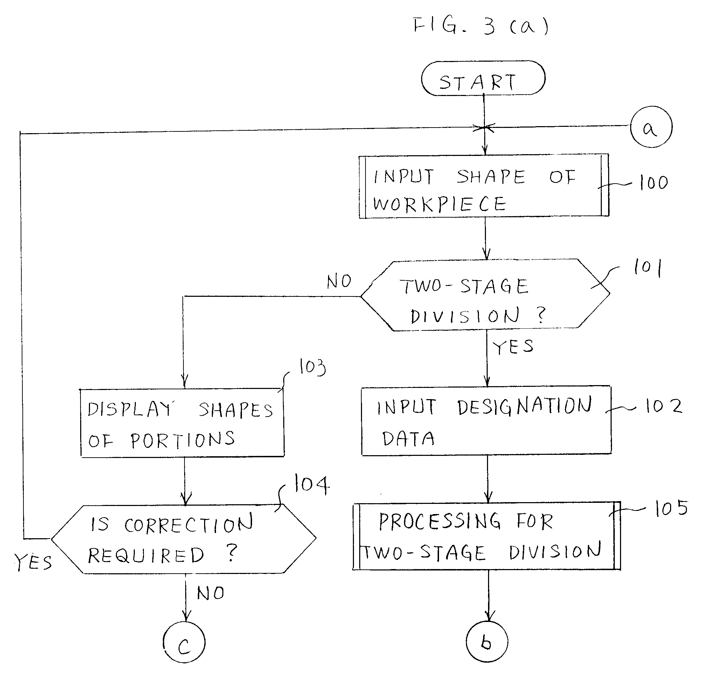

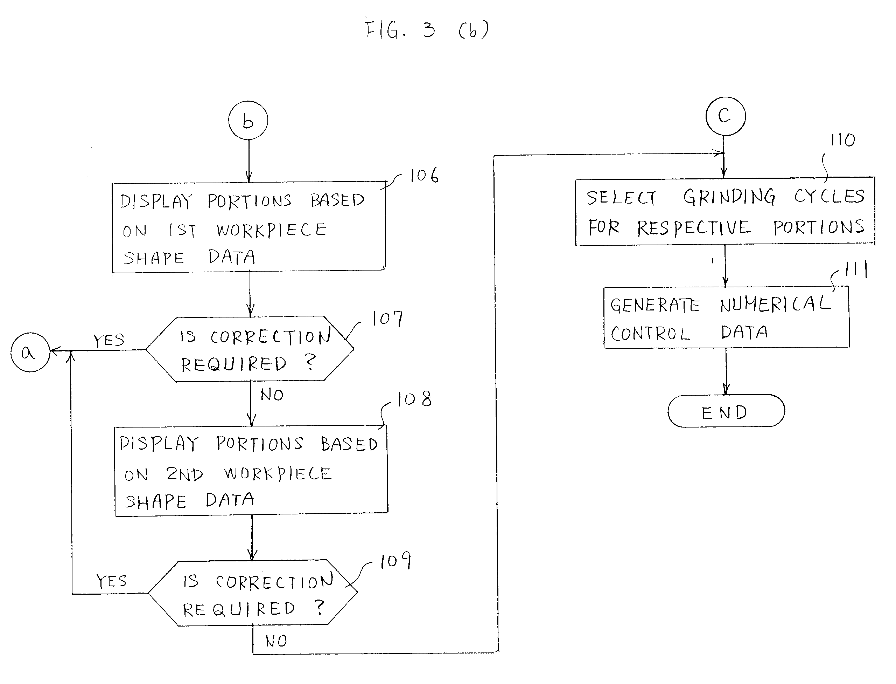

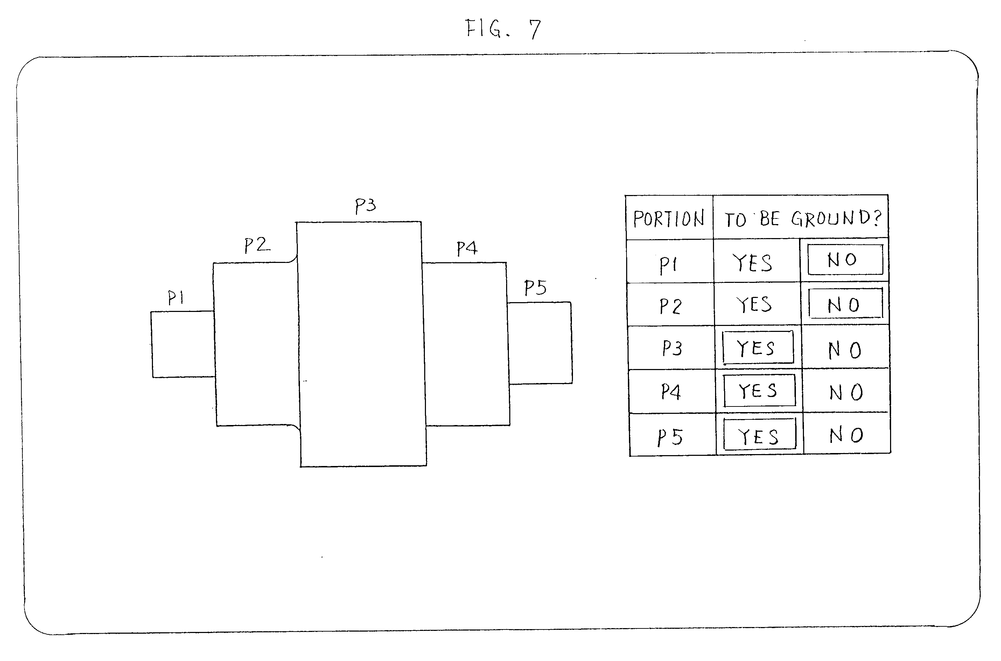

A control program for realizing a data preparation process is stored in the memory 24 of the numerical controller 20, and is executed by the CPU 22. The processing of the CPU 22 will now be described with reference to flowcharts shown in FIGS 3 (a) through 6 and explanation charts shown in FIGS 7 through 11.

When an operator commands the numerical controller 20 to enter its data preparation mode, the CPU 22 executes a control program expressed by flowcharts shown in FIGS. 3 (a) and 3 (b).

At step 100, the CPU 22 displays on the CRT 14 a graphic image and messages to request the operator to input data defining the shape of a workpiece. In this example data defining shapes of five portions P1 through P5 of a workpiece are input through a keyboard 18 and is stored in the memory 24. At next step 101, it is judged whether or not data commanding two-stage division is entered by the operator. When two-stage division is not commanded, the processing moves to step 103 to display on the CRT 14 both of portions which are required to be ground and portions which are not required to be ground. When a correction is required, the processing moves back to step 100. When a correction is not required, the processing moves to step 110 in FIG. 3 (b).

When two-stage division is commanded at step 101, the processing moves to step 102 to request the operator to input data indicating which portions must be ground in a first grinding stage. Namely, all portions of the workpiece and a designation table are displayed on the CRT 14, as shown in FIG. 7. At this time, the operator designates which portions must be in the first grinding stage. At first a cursor is located at "YES" in a line corresponding to the first portion P1. When the first portion P1 is not required to be ground in the first grinding stage, the operator moves the cursor to "NO" and then presses a return key. In the similar manner, designation data are input for the rest of portions P2 through P5. In this instance, the portions P3 through P5 are designated as portions to be ground in the first grinding stage. The designation data are memorized in the divisional data memory area 244 of the memory 24.

At step 105, a first workpiece shape data and a second workpiece shape data are produced from the shape data input at step 100 based upon the designation data memorized in the divisional data memory area 244, and are stored in a buffer area of the memory 24.

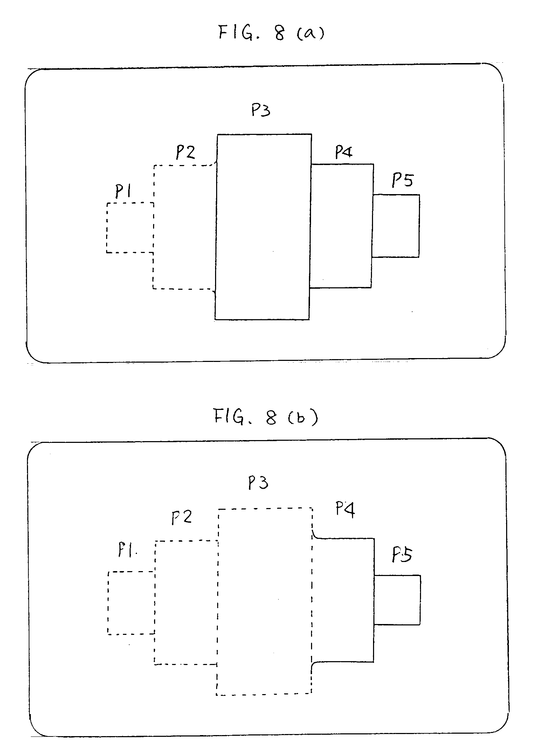

After the above divisional processing, some portions to be ground in the first grinding stage are displayed at step 106 based upon the first workpiece shape data. In this case, portions P3, P4 and P4 are displayed at this step, as shown in FIG. 8 (a). When a correction is required, the process moves back to step 100 through step 107. After that, the rest of portions to be ground in the second grinding stage, i.e., the portions P1 and P2 are displayed based upon the second workpiece shape data, as shown in FIG. 8 (b). When a correction is required, the process moves back to step 100 through step 109.

At step 110, suitable grinding cycles or grinding modes are automatically determined for respective portions of the first and second workpiece shapes, and at step 111, numerical control data such as rough grinding amount, rough infeed rate, fine grinding amount and fine infeed rate are generated for each portion of the first and second workpiece shapes based upon the various input data such as dimensions and removal amounts included in the first and second workpiece data. With the above-operation, first numerical control data used in the first grinding stage and second numerical control data used in the second grinding stage are generated, and the generated two sets of numerical control data are stored in the first and second data areas DA1 ad DA2 of the numerical control data memory area 242, as shown in FIG. 2 (a). After that, the data preparation processing ends.

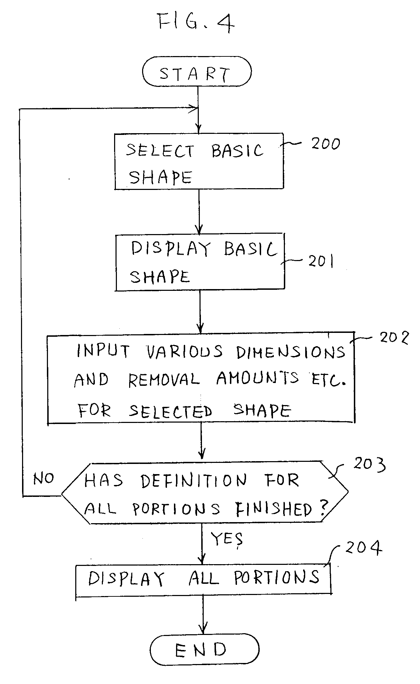

The processing for inputting shape data at step 100 will be described in detail with reference to a flowchart shown in FIG. 4.

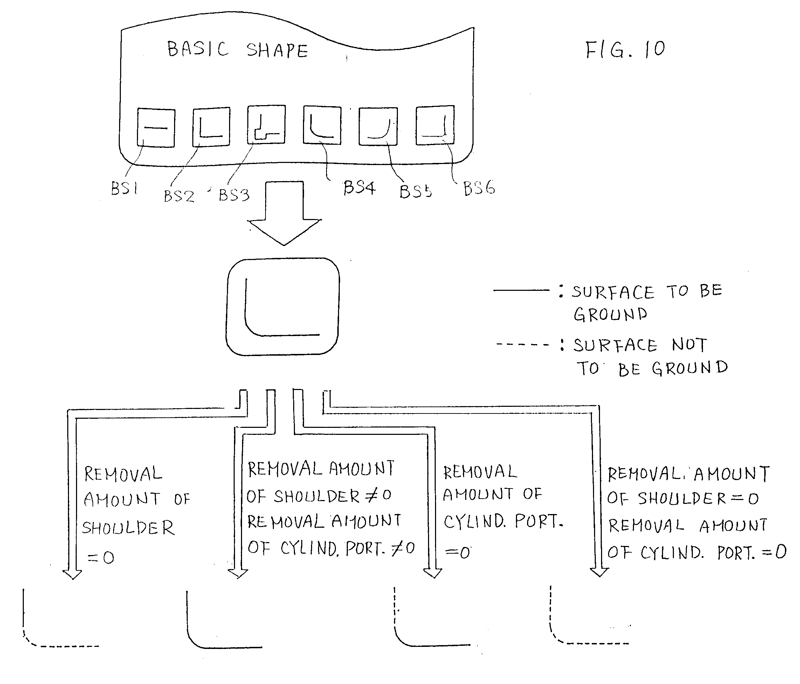

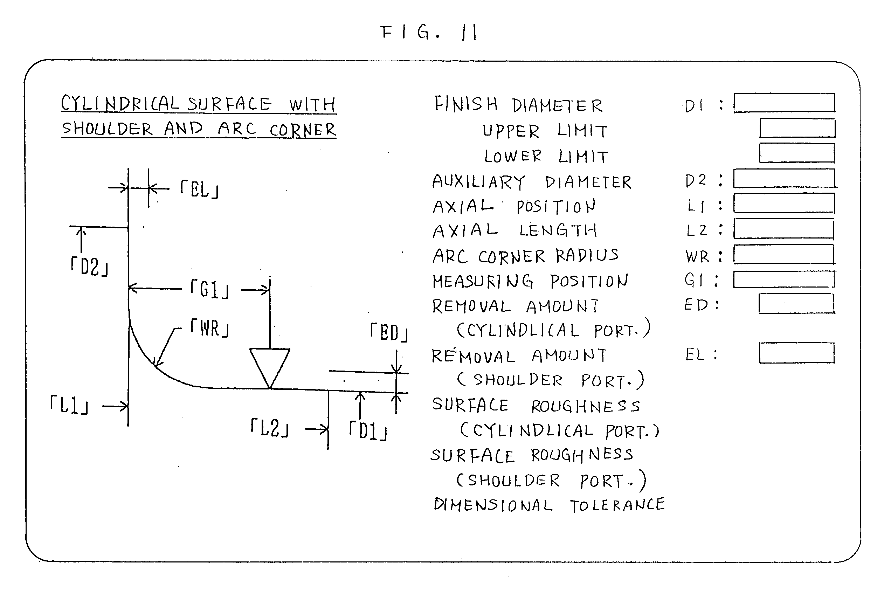

Since the shape data are input portion by portion, the processing at steps 200 through 202 are repeated until all shapes of portions are input. At first, various kinds of basic shapes are displayed on the CRT 14 at step 200 as shown in FIG. 10. At this step, the operator selects a shape corresponding to the shape of a portion to be defined. For example, when the shape of the portion P4 is input, a basic shape BS4 is selected because the portion P4 is a cylindrical surface with a shoulder end surface and a corner to be ground. At next step 201, an enlarged basic shape BS4 and names of data to be input are shown on the CRT 14, as shown in FIG. 11. The input data include the final diameter of cylindrical surface, the axial position of the shoulder end surface, removal amounts, surface roughness and the like. These data are input at step 202.

At step 203, it is judged whether or not shape definition is carried out for all portions. When it is judged that the shapes of all portions have not been defined, the processing moves back to step 200 to repeat the processing at steps 200 through 203. After the shapes of all portions are input, the processing moves from step 203 to step 204 to display all of portions P1 to P5 taking into account the dimensions of respective portions. When a portion has a cylindrical surface and shoulder end surface, it is automatically decided whether or not cylindrical surface and shoulder surface are required to be ground based upon respective removal amounts, and surfaces to be ground are illustrated with solid line and surfaces not to be ground are illustrated with broken line, as shown at the bottom of FIG. 10.

The processing at step 105 will be described with reference to flowcharts shown in FIGS. 5 (a) and (b). At step 300, parameter n is initially reset to 1 which designates one of portions. At step 301, it is judged, based upon the designation data input at step 102, whether or not Nth portion designated by the parameter n is required to be ground in the first grinding stage. When it is judged that Nth portion is required to be ground in the first grinding stage, the process moves to step 302 to add the shape data of Nth portion to first workpiece shape data in a buffer area of the memory 24 as it is. When it is judged that Nth portion is not required to be ground in the first grinding stage, the process moves to step 303 to add the shape data of Nth portion to the first workpiece shape data after the removal amounts in the shape data are rewritten to be zero. At step 304, it is judged whether or not the processing for all portions are finished. When not finished, the processing moves back to step 301 via step 305 at which the parameter n is incremented by 1. When finished, the processing moves to step 306 in FIG. 5 (b) to carry out a similar processing for the second workpiece shape data. Namely, at step 306, parameter n is initially reset to 1 which designates one of portions. At step 307, it is judged, based upon the designation data input at step 102, whether or not Nth portion designated by the parameter n is required to be ground in the first grinding stage. When it is judged that Nth portion is required to be ground in the first grinding stage, i.e., not required to be ground in the second grinding stage, the process moves to step 309 to add the shape data of Nth portion to the second workpiece shape data after the removal amounts in the shape data are rewritten to be zero. When it is judged that Nth portion is not required to be ground in the first grinding stage, i.e., required to be ground in the second grinding stage, the process moves to step 308 to add the shape data of Nth portion to the second workpiece shape data as it is. At step 310, it is judged whether or not the processing for all portions are finished. When not finished, the processing moves back to step 307 via step 311 at which the parameter n is incremented by 1. When finished, the processing moves to step 312. At step 312, portion numbers of the second workpiece shape data are rewritten to have reversed portion numbers. As a result, the portion P1 is regarded as P5 and P2 as P4 in the second workpiece shape data. The some data such as axial positions of respective portions are also modified for displaying the second workpiece shape. The obtained first and second workpiece shapes are shown in FIG. 8 (a) and 8 (b), respectively.

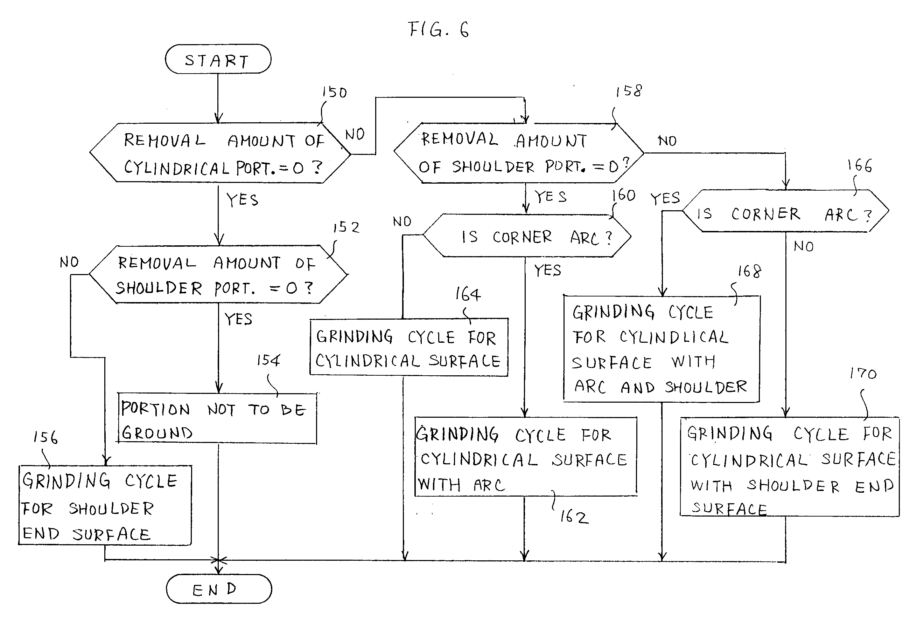

The processing for the automatic selection of grinding cycle in step 110 will be described in detail with reference to a flowchart shown in FIG. 6.

At step 150, it is judged whether or not the removal amount of the cylindrical surface of a portion to be ground is zero. When the removal amount of the cylindrical surface is zero, the processing moves to step 152 to judge whether or not the removal amount of a shoulder end surface thereof is zero. When the removal amount of the shoulder end surface is also zero, the processing moves to step 154 to judge that the portion is not required to be ground.

When it is judged at step 152 that the removal amount of the shoulder end surface is not zero, it means that only shoulder end surface is required to be ground. In this case the processing moves to step 156 to select a grinding cycle for shoulder end surface shown in FIG. 9 (c).

When it is judged at step 150 that the removal amount of the cylindrical portion is not zero, the processing moves to step 158 to judge whether or not the removal amount of a shoulder end surface thereof is zero. When the removal amount of the shoulder end surface is also zero, it means that the shoulder end surface is not required to be ground. In this case, the processing moves to step 160 to judge whether or not the corner of the portion is arclike shape. When the corner is arclike shape, the corner is also required to be ground. In this case, the processing moves to step 162 to select a grinding cycle for cylindrical surface with arc shown in FIG. 9 (b). When it is judged at step 160 that the corner is not arc, the processing moves to step 164 to select a grinding cycle for simple cylindrical surface without arc shown in FIG. 9 (a).

Further, when it is judged at step 158 that the removal amount of the shoulder end surface is not zero, it means that both of the cylindrical surface and shoulder end surface are required to be ground. After this judgment, it is judged at step 166 whether or not the corner is arc. When the corner is arclike shape, the processing moves to step 168 to select a grinding cycle for cylindrical surface with shoulder end surface and arc shown in FIG. 9 (d). When it is judged at step 168 that the corner is not arclike shape, the processing moves to step 170 to select a grinding cycle for cylindrical surface with shoulder end surface shown in FIG. 9 (e).

The above mentioned cycle selection is carried out for each of the plural portions of first and second workpiece shapes, and data indicating selected grinding cycles for respective portions are stored in the data areas DA1 and DA2 of the numerical control data area 244 together with various numerical control data such as rough removal amount, feed rate and the like which are necessary to execute the selected grinding cycles. As described above, these data are automatically calculated based upon input data.

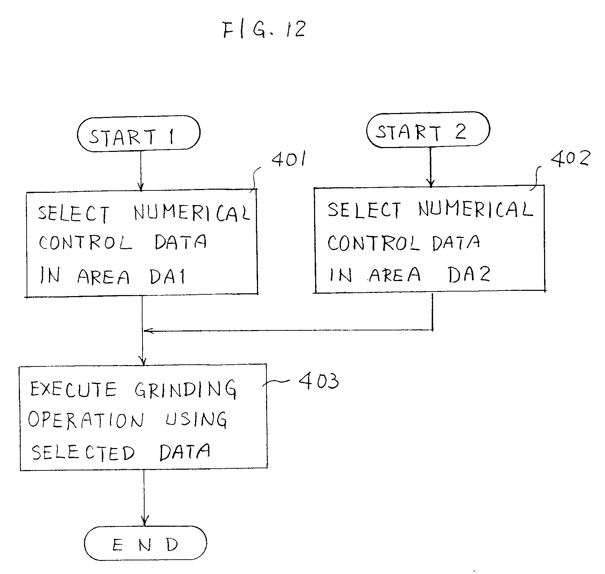

The grinding operation of the numerically controlled grinding machine will be described hereinafter with reference to a flowchart shown in FIG. 12. At first, a workpiece is supported between the main spindle 53 and the tail stock spindle 54 in the state that the portions P1 is located near the main spindle 53. Under this condition, the operator command the numerical controller 20 through a switch (not shown) on the operation panel 10 to execute grinding operation using numerical control data memorized in the data area DA1. Since the numerical control data stored in the data area DA1 are for the portions P3, P4 and P5, these three portions are ground in accordance with respective grinding cycles. After the above mentioned first grinding stage, the workpiece is turned so that the portion P5 is located near the main spindle 53. Under this condition, the operator commands the numerical controller 20 to execute grinding operation using numerical control data memorized in the data area DA2. Since the numerical control data stored in the data area DA2 are for the portions P1 and P2, these two portions are ground in accordance with respective grinding cycles.

Obviously, numerous modifications and variations of the present invention are possible in light of the above teachings. It is therefore to be understood that within the scope of the appended claims, the present invention may be practiced otherwise than as specifically described herein.

A numerically controlled grinding machine for grinding plural portions of a cylindrical workpiece, wherein some of the portions are ground in a first grinding stage and the rest of portions are ground in a second grinding stage. An operator inputs machining data required for grinding plural portions, and designates the some of portions to be ground in a first grinding stage. The numerical controller of the grinding machine generates a first set of numerical control data used in the first grinding stage in which the some of portions are ground and a second set of numerical control data used in the second grinding stage in which the rest of portions are ground. The numerical controller executes grinding operation using the first set of numerical control data when the workpiece is supported under the state that one end of the workpiece faces the main spindle, while executing grinding operation using the second set of numerical control data when the workpiece is supported under the state that other end of the workpiece faces the main spindle.

**Claims**

1.   A method of preparing numerical control data for numerically controlling a machine tool wherein plural portions of a workpiece are machined in plural separate machining stages, said method comprising steps of

inputting machining data such as finish dimension which are required for machining the plural portions of the workpiece;

designating which portion is machined in which machining stage; and

generating based upon the machining data plural sets of numerical control data used in the respective machining stages in which the designated portions are respectively machined.

2.   A method of preparing numerical control data according to Claim 1, wherein shapes and removal amounts of respective portions are input at said data input step, and wherein said numerical control data generating step comprises steps of selecting suitable machining cycles for respective portions based upon the shapes of respective portions, and obtaining control data required to execute the selected machining cycles.

3.   A method for grinding plural portions of a cylindrical workpiece by a numerically controlled grinding machine, wherein a first group of portions are ground in a first grinding stage under the state that one end of the workpiece faces a main spindle of said grinding machine, and a second group of portions are ground in a second grinding stage under the state that the other end of the workpiece faces said main spindle, said method comprising:

inputting data such as finish dimension which are required for grinding plural portions of said workpiece to be ground;

designating the first group of portions to be ground in the first grinding stage and the second group of portions to be ground in the second grinding stage;

generating a first set of numerical control data used in the first grinding stage in which the first group of portions are ground;

generating a second set of numerical control data used in the second grinding stage in which the second group of portions are ground;

supporting the workpiece by the main spindle of said grinding machine under the state that said one end of the workpiece faces the main spindle;

grinding the first group of portions using the first set of numerical control data;

changing the posture of the workpiece so that said other end of the workpiece faces the main spindle; and

grinding the second group of portions using the second set of numerical control data.

4. An apparatus for preparing numerical control data for a numerically controlled machine tool wherein plural portions of a workpiece are machined in plural separate machining stages, said apparatus comprising:

means for inputting machining data such as finish dimension which are required for machining the plural portions of the workpiece;

means for designating which portion is machined in which machining stage; and

means for generating based upon the machining data plural sets of numerical control data used in the respective stages in which the designated portions are respectively machined.

5. An apparatus for preparing numerical control data according to Claim 4, wherein shapes and removal amounts of respective portions are input by said data input means, and wherein said numerical control data generaling means comprises means for selecting suitable grinding cycles for respective portions based upon the shapes of respective portions, and means for obtaining control data required to execute the selected grinding cycles.

6. A numerically controlled grinding machine for grinding plural portions of a cylindrical workpiece, wherein a first group of the portions are ground in a first grinding stage under the state that one end of the workpiece faces a main spindle of said grinding machine, and a second group of portions are ground in a second grinding stage under the state that the other end of the workpiece faces said main spindle, said numerically controlled grinding machine comprising:

means for inputting machining data such as finish dimension which are required for grinding plural portions of said workpiece to be ground;

means for designating the first group of portions to be ground in the first grinding stage and the second group of portions to be ground in the second grinding stage;

means generating a first set of numerical control data used in the first grinding stage in which the first group of portions are ground;

means for generating a second set of numerical control data used in the second grinding stage in which the second group of portions are ground;

means for executing grinding operation using said first set of numerical control data when the workpiece is supported by the main spindle of said grinding machine under the state that said one end of the workpiece faces the main spindle; and

means for executing grinding operation using said second set of numerical control data when the workpiece is supported by the main spindle under the state that said other end of the workpiece faces the main spindle.

FIG. 1 (a)

FIG. 1 (b)

- 24
- GRINDING CYCLE MEMORY AREA — 241
- NUMERICAL CONTROL DATA MEMORY AREA — 242
- BASIC SHAPE MEMORY AREA — 243
- DIVISIONAL DATA MEMORY AREA — 244
- CPU — 22
- IF — 26a
- IF — 26b
- PULSE GENERATING CIRCUIT — 28
- 20
- DUX — 32
- 36
- DUZ — 34
- 38
- CRT DRIVE CIRCUIT — 12
- 10
- KB — 18
- CRT — 14

EP 0 488 290 A1

FIG. 2 (a)

FIG. 2 (b)

FIG. 3 (a)

START

a

INPUT SHAPE OF WORKPIECE ~ 100

TWO-STAGE DIVISION ? 101
NO / YES

DISPLAY SHAPES OF PORTIONS ~ 103

INPUT DESIGNATION DATA ~ 102

IS CORRECTION REQUIRED ? 104
YES / NO

PROCESSING FOR TWO-STAGE DIVISION ~ 105

C

b

EP 0 488 290 A1

FIG. 3 (b)

(b)

DISPLAY PORTIONS BASED ON 1ST WORKPIECE SHAPE DATA — 106

IS CORRECTION REQUIRED ? — 107

YES → (a)

NO

DISPLAY PORTIONS BASED ON 2ND WORKPIECE SHAPE DATA — 108

IS CORRECTION REQUIRED ? — 109

YES

NO

(c)

SELECT GRINDING CYCLES FOR RESPECTIVE PORTIONS — 110

GENERATE NUMERICAL CONTROL DATA — 111

END

EP 0 488 290 A1

## FIG. 4

```
        ( START )
            │
            ▼
   ┌─────────────────┐
   │ SELECT  BASIC   │ ─── 200
   │ SHAPE           │
   └─────────────────┘
            │
            ▼
   ┌─────────────────┐
   │ DISPLAY BASIC   │ ─ 201
   │ SHAPE           │
   └─────────────────┘
            │
            ▼
   ┌──────────────────────────┐
   │ INPUT VARIOUS DIMENSIONS │ ─ 202
   │ AND  REMOVAL  AMOUNTS ETC.│
   │ FOR  SELECTED  SHAPE     │
   └──────────────────────────┘
            │
            ▼
 NO   ╱ HAS DEFINITION  FOR  ╲ ─ 203
◄─────  ALL PORTIONS FINISHED ?
      ╲                      ╱
            │ YES
            ▼
   ┌──────────────────────────┐ ─ 204
   │ DISPLAY   ALL PORTIONS   │
   └──────────────────────────┘
            │
            ▼
        ( END )
```

EP 0 488 290 A1

FIG. 5 (a)

START

300  n = 1

301  IS NTH PORTION TO BE GROUND?

YES → 302  ADD DATA OF NTH PORTION TO 1ST WORKPIECE SHAPE DATA

NO → 303  CORRECT REMOVAL AMOUNT TO BE ZERO AND ADD DATA OF NTH PORTION TO 1ST WORKPIECE SHAPE DATA

304  IS PROCESSING FOR ALL PORTIONS FINISHED?

a

305  n = n + 1

14

FIG. 5 (b)

(d)

n = 1 — 306

IS NTH PORTION TO BE GROUND? — 307
YES

NO — 308

ADD DATA OF NTH PORTION TO 2ND WORKPIECE SHAPE DATA

n = n + 1 — 311

309

CORRECT REMOVAL AMOUNT TO BE ZERO AND ADD DATA OF NTH PORTION TO 2ND WORKPIECE SHAPE DATA

IS PROCESSING FOR ALL PORTIONS FINISHED? — 310

REVERSE PORTION NUMBER OF 2ND WORKPIECE SHAPE DATA — 312

END

EP 0 488 290 A1

FIG. 6

FIG. 7

| PORTION | TO BE GROUND? | |
|---|---|---|
| P1 | YES | NO |
| P2 | YES | NO |
| P3 | YES | NO |
| P4 | YES | NO |
| P5 | YES | NO |

FIG. 8 (a)

FIG. 8 (b)

FIG. 9

(a)

(b)

(c)

(d)

(e)

EP 0 488 290 A1

FIG. 10

BASIC SHAPE

BS1  BS2  BS3  BS4  BS5  BS6

————— : SURFACE TO BE GROUND

----- : SURFACE NOT TO BE GROUND

REMOVAL AMOUNT OF SHOULDER = 0

REMOVAL AMOUNT OF SHOULDER ≠ 0 REMOVAL AMOUNT OF CYLIND. PORT. ≠ 0

REMOVAL AMOUNT OF CYLIND. PORT. = 0

REMOVAL AMOUNT OF SHOULDER = 0 REMOVAL AMOUNT OF CYLIND. PORT. = 0

$$\text{F I G. } 11$$

CYLINDRICAL SURFACE WITH
SHOULDER AND ARC CORNER

| FINISH DIAMETER | D1 : | |
| UPPER LIMIT | | |
| LOWER LIMIT | | |
| AUXILIARY DIAMETER | D2 : | |
| AXIAL POSITION | L1 : | |
| AXIAL LENGTH | L2 : | |
| ARC CORNER RADIUS | WR : | |
| MEASURING POSITION | G1 : | |
| REMOVAL AMOUNT (CYLINDLICAL PORT.) | ED : | |
| REMOVAL AMOUNT (SHOULDER PORT.) | EL : | |
| SURFACE ROUGHNESS (CYLINDLICAL PORT.) | | |
| SURFACE ROUGHNESS (SHOULDER PORT.) | | |
| DIMENSIONAL TOLERANCE | | |

FIG. 12

```
   ┌──────────┐                    ┌──────────┐
   │ START 1  │                    │ START 2  │
   └────┬─────┘          ┌ 401     └────┬─────┘          ┌ 402
        │                                │
   ┌────▼──────────────┐           ┌─────▼─────────────┐
   │ SELECT NUMERICAL  │           │ SELECT NUMERICAL  │
   │ CONTROL DATA      │           │ CONTROL DATA      │
   │ IN AREA DA1       │           │ IN AREA DA2       │
   └────┬──────────────┘           └─────┬─────────────┘
        │                                │
        │◄───────────────────────────────┘
        │
   ┌────▼──────────────┐   ~ 403
   │ EXECUTE GRINDING  │
   │ OPERATION USING   │
   │ SELECTED DATA     │
   └────┬──────────────┘
        │
   ┌────▼─────┐
   │   END    │
   └──────────┘
```

## DOCUMENTS CONSIDERED TO BE RELEVANT

EP 91120404.8

| Category | Citation of document with indication, where appropriate, of relevant passages | Relevant to claim | CLASSIFICATION OF THE APPLICATION (Int. Cl.5) |
|---|---|---|---|
| X | EP - A - 0 441 386 (MITSUBISHI) | 1,2,4,5 | G 05 B 19/18 B 23 Q 15/02 |
| A | * Abstract; fig. 1,5,6,7,9, 11,20; claim 1 * | 3,6 | |
| X | US - A - 4 571 670 (KISHI) | 1,2,4,5 | |
| A | * Abstract; fig. 5,6; claims 1-4,6c,7c * | 3,6 | |
| X | US - A - 4 498 259 (YAMAMOTO) | 1,2,4,5 | |
| Y | * Abstract; fig. 3b,4b,4c,5; claim 6 * | 3,6 | |
| Y | US - A - 4 731 607 (YONEDA) | 3,6 | |
| X | * Abstract; fig. 1,2,3,4; claim 1,2 * | 1,2,4,5 | TECHNICAL FIELDS SEARCHED (Int. Cl.5) |
| X | US - A - 4 204 253 (HANENBERG) | 1,2,4,5 | B 23 Q 15/00 B 24 B 49/00 G 05 B 19/00 G 06 F 15/00 G 09 G 3/00 |
| A | * Abstract; fig. 3,4; claim 2 * | | |

The present search report has been drawn up for all claims

| Place of search | Date of completion of the search | Examiner |
|---|---|---|
| VIENNA | 20-02-1992 | BLASL |